# EUROPÄISCHE PATENTSCHRIFT

(11) **EP 4 371 387 B1**
(45) Veröffentlichungstag und Bekanntmachung des Hinweises auf die Patenterteilung: **02.09.2026**
(21) Anmeldenummer: 23208586.0
(22) Anmeldetag: 08.11.2023
(51) Int. Cl.: A01C 23/00

(54) **VERTEILEINRICHTUNG ZUM VERTEILEN EINES FLIESSFÄHIGEN MEDIUMS UND VERFAHREN ZUM AUSBRINGEN VON EXTRAKTEN AUF LANDWIRTSCHAFTLICHE FLÄCHEN**
DISTRIBUTION DEVICE FOR DISTRIBUTING A FLOWABLE MEDIUM AND METHOD FOR APPLYING EXTRACTS ON AGRICULTURAL SURFACES
DISPOSITIF DE DISTRIBUTION POUR DISTRIBUER UN MILIEU COULANT ET PROCÉDÉ D'ÉPANDAGE D'EXTRAITS SUR DES SURFACES AGRICOLES

(30) Priorität: 21.11.2022 DE 102022130703
(43) Veröffentlichungstag der Anmeldung: 22.05.2024
(73) Patentinhaber: Kumm Technik GmbH, 56593 Krunkel (DE)
(72) Erfinder: Kumm, Michael, 57635 Hasselbach (DE)
(74) Vertreter: Hannke, Christian

(56) Entgegenhaltungen:
- EP-A1- 4 085 744
- EP-B1- 0 430 347
- US-A1- 2022 295 692

## Beschreibung

Die vorliegende Erfindung bezieht sich auf eine Vorrichtung und ein Verfahren zum Ausbringen von fließfähigen Medien, insbesondere Extrakten, insbesondere sog. Gülle auf Flächen und insbesondere auf landwirtschaftliche Nutzflächen. Derartige Vorrichtungen und Verfahren sind auf dem Stand der Technik seit langem bekannt. Dabei werden beispielsweise ausgehend von einem Tank diese Substanzen zu einer Verteileinrichtung gefördert, welche diese Substanzen dann auf eine Vielzahl von Leitungen wie etwa Schläuche verteilt und diese die Substanz dann letztlich auf die Fläche ausbringen.

Die EP 0 430 347 B1 offenbart eine mobile Vorrichtung zum Einbringen von Flüssigdünger, wie beispielsweise Gülle, in den Boden. Mit einem rotierenden Element wird eine Kerbe in den Boden geschnitten. Aus einem Behälter wird ein Flüssigdünger über eine Verteileinrichtung in den Bereich des rotierenden Elementes gefördert, um den Flüssigdünger in der Nähe des Bodenschnittes gleichförmig zu verteilen.

Die EP 3 744 163 B1 offenbart eine Düngeeinrichtung mit Verteileinrichtung und Verteilplatte für flüssige Substanzen. Die Verteilerplatte besteht hierbei aus zwei Teilen, wobei jedes Teil Durchgangsöffnungen besitzt. Durch ein Verdrehen der beiden Teile relativ zueinander kann die Durchgangsöffnung der Verteilerplatte angepasst und hierdurch der Querschnitt, durch den die flüssige Substanz fließt, variiert werden.

Die US 2022/295692 A1 offenbart einen Verteiler für Gülle mit einer Platte mit Löchern und einer Abdeckung ebenfalls mit Löchern. Diese können gegeneinander verdreht werden, so dass ein Durchfluss für die Gülle freigegeben oder versperrt wird. Der Verteiler kann auch eine Schneidvorrichtung beinhalten, mit deren Hilfe Feststoffe in der Gülle zerkleinert werden können.

Die EP 4 085 744 offenbart eine weitere Verteilervorrichtung mit verstellbarem Durchtrittsquerschnitt.

Derartige Verteileinrichtungen weisen üblicherweise eine Vielzahl von Öffnungen auf, durch welche das Extrakt treten kann. Daneben ist üblicherweise eine Art Drehschieber vorgesehen, der über diese Öffnungen streicht und auf diese Weise die Austragung fördert.

Nun kann es immer wieder vorkommen, dass sich in dem Extrakt störende Elemente befinden, wie beispielsweise Holzstückchen oder dergleichen. Diese können die Verteileinrichtung stören, und beispielsweise einen Motor oder einen Drehschieber oder dergleichen dieser Verteileinrichtung blockieren. In diesem Falle stoppt oder reduziert sich dann die vollständige Austragung über diesen Verteiler. Es kommt dann zu einem teilweisen Ausfall der Ausbringung.

Der vorliegenden Erfindung liegt daher die Aufgabe zugrunde, die Störanfälligkeit derartiger Extraktaustragungen zu verringern. Dies wird erfindungsgemäß durch eine Verteileinrichtung nach dem unabhängigen Anspruch 1 sowie ein Verfahren nach Anspruch 7 erreicht. Vorteilhafte Ausführungsformen und Weiterbildungen sind Gegenstand der Unteransprüche.

Eine bevorzugte Vorrichtung zum Ausbringen eines fließfähigen Mediums, insbesondere eines Extrakts auf landwirtschaftliche Nutzflächen weist ein Reservoir zur Aufnahme des Extrakts auf, und weiterhin eine Förderleitung zum Fördern des Extrakts zu einer Verteileinrichtung, sowie eine erfindungsgemäße Verteileinrichtung.

Dabei weist die Verteileinrichtung einen Zufluss und/oder eine Zuführeinrichtung auf, mittels dessen einem Aufnahmeraum der Verteileinrichtung das Extrakt zuführbar ist, sowie eine Vielzahl von Ausgängen, über welche das Extrakt (von dem Aufnahmeraum) auf eine Vielzahl von Ausbringleitungen verteilbar ist. Weiterhin weist die Verteileinrichtung einen innerhalb des Aufnahmeraums bezüglich einer Drehachse drehbaren Verteilkörper auf, der von einem Motor zur Drehung antreibbar ist und weiterhin eine Steuerungseinrichtung zum Steuern dieses Motors.

Erfindungsgemäß weist die Vorrichtung wenigstens eine Sensoreinrichtung auf, welche wenigstens einen Wert erfasst, der für eine ordnungsgemäße Funktion der Verteileinrichtung charakteristisch ist und die Steuerungseinrichtung ist dazu geeignet und bestimmt, den Motor unter Berücksichtigung dieses charakteristischen Werts zu steuern.

Bei einer weiteren erfindungsgemäßen Ausführungsform ist die Steuerungseinrichtung dazu geeignet und bestimmt, den Aufnahmeraum unter Berücksichtigung dieses charakteristischen Wertes zu öffnen und/oder zu schließen.

Weiterhin sind vorteilhaft die beiden oben genannten Ausgestaltungen kombiniert, d.h. die Steuerungseinrichtung ist sowohl dazu geeignet und bestimmt, den Motor unter Berücksichtigung dieses charakteristischen Werts zu steuern als auch dazu geeignet und bestimmt, den Aufnahmeraum unter Berücksichtigung dieses charakteristischen Wertes zu öffnen und/oder zu schließen

Es wird daher insbesondere vorgeschlagen, dass die ordnungsgemäße Funktion der Verteileinrichtung und insbesondere des Motors direkt und/oder indirekt überwacht wird und in Reaktion auf diese Überwachung der Motor gesteuert wird.

Besonders bevorzugt befinden sich an den Ausgängen Leitungen und insbesondere flexible Leitungen und insbesondere flexible Schläuche. Diese Schläuche enden bevorzugt an unterschiedlichen Positionen und insbesondere an Positionen, welche eine Ausbringung des Extrakts auf die Nutzfläche ermöglichen.

Bei einer bevorzugten Ausführungsform handelt es sich bei dem Reservoir um einen Tank. Dieses Reservoir ist insbesondere mobil angeordnet und kann insbesondere auf oder an einem Fahrzeug angeordnet sein.

Besonders bevorzugt ist ein Aufnahmevolumen dieser Verteileinrichtung und/oder des Aufnahmeraums dieser Verteileinrichtung größer als 2dm³ bevorzugt größer als 3 dm³, bevorzugt größer als 4 dm³,. bevorzugt größer als 8 dm³, bevorzugt größer als 10 dm³ und besonders bevorzugt größer als 15 dm³,

Besonders bevorzugt ist ein Aufnahmevolumen der Verteileinrichtung kleiner als 100 dm³ bevorzugt kleiner als 80 dm³ bevorzugt kleiner als 60 dm³ bevorzugt kleiner als 50 dm³ und besonders bevorzugt kleiner als 40 dm³

Einer weiteren vorteilhaften Ausführungsform weist die Vorrichtung einer Fördereinrichtung und insbesondere eine Pumpeinrichtung auf, um das Extrakt von dem Reservoir zu der Verteileinrichtung zu fördern.

Besonders bevorzugt ist dabei eine zentrale Förderleitung vorgesehen, welche bevorzugt in weitere Abzweigleitungen abzweigt, um gegebenenfalls das Extrakt auch zu mehreren Verteileinrichtungen zu verteilen.

Bei einer weiteren vorteilhaften Ausführungsform handelt es sich bei dem Motor um einen Hydraulikmotor und es ist bevorzugt wenigstens eine Zuleitung vorgesehen, welche dem Hydraulikmotor ein Hydraulikmittel zuführt, sowie wenigstens eine Ableitung, welche das Hydraulikmittel von dem Hydraulikmotor abführt.

Hydraulikmotoren eignen sich in besonderer Weise für die vorliegende Anwendung, da derartige Vorrichtungen oder Maschinen in der Regel an oder mit landwirtschaftlichen Nutzfahrzeugen eingesetzt werden.

Bei einer erfindungsgemäßen Ausführungsform ist die Sensoreinrichtung dazu geeignet und bestimmt, wenigstens einen Wert zu erfassen, der für den Betrieb dieses Motors charakteristisch ist, wobei bevorzugt die Sensoreinrichtung aus einer Gruppe von Sensoreinrichtungen ausgewählt ist, welche Drucksensoren, Drehzahlsensoren und Durchflusssensoren enthält. Bevorzugt ist daher die Sensoreinrichtung dazu geeignet und bestimmt, mittelbar den Betrieb des Motors und/oder des Verteilkörpers zu bestimmen.

Auf diese Weise kann die Sensoreinrichtung mittelbar eine Verstopfung der Verteileinrichtung bzw. des Extraktverteilers erkennen. Bei der Verwendung eines Hydraulikmotors treten damit zwei getrennte Volumenströme auf, nämlich einerseits derjenige des Hydraulikmittels und andererseits derjenige des Extrakts, beispielsweise Gülle.

So wäre es beispielsweise möglich, dass eine Sensoreinrichtung erfasst, dass ein Druck an der Hydraulikmotor steigt. In diesem Fall handelt es sich bei der Sensoreinrichtung um einen Drucksensor. Daneben wäre es auch möglich, den Durchfluss zu messen, der den Hydraulikmotor erreicht, oder von diesem abgeht. In diesem Falle würde es sich bei der Sensoreinrichtung um einen Durchflusssensor handeln.

Daneben wäre es auch möglich, dass bedingt durch einen Fehler eine Drehzahl an der Verteileinrichtung sinkt oder der Motor stehenbleibt. In diesem Fall handelt es sich bevorzugt bei der Sensoreinrichtung um einen Drehzahlmesser.

Daneben könnten jedoch auch, insbesondere bei der Verwendung anderer Motoren, Sensoren eingesetzt werden, welche etwa ein Drehmoment bestimmen. Auch wäre es möglich, dass bei der Verwendung eines Hydraulikmotors ein Drehmoment des Motors erfasst und/oder bestimmt wird. Auch dieses kann ein Maß für eine etwaige Verstopfung oder eine Behinderung der Verteileinrichtung sein.

Daneben wäre es jedoch auch möglich, dass die Sensoreinrichtung einen für den Extraktfluss charakteristischen Wert bestimmt. So kann etwa ein Druck in der Ausbringleitung bestimmt werden, oder aber ein Durchfluss in der Zuführleitung, welche von dem Reservoir zu der oder den Verteileinrichtungen führt. Daneben wäre es auch möglich, einen Druck in der Zuführleitung zu bestimmen, über welche das Extrakt der Verteileinrichtung oder den Verteileinrichtungen zugeführt wird. Auch wäre es möglich, dass in dem Aufnahmeraum eine derartige Sensoreinrichtung angeordnet ist.

Besonders bevorzugt handelt es sich bei der Sensoreinrichtung daher um einen Drucksensor, der dazu geeignet und bestimmt ist, einen Druck des Hydraulikmittels und/ oder einen Druck an dem Hydraulikmotor und/oder einen Druck in einer Extraktleitung zu erfassen. Bei einer weiteren bevorzugten Ausführungsform handelt es sich bei der Sensoreinrichtung um einen Durchflusssensor, welcher einen Durchfluss des Hydraulikmittels und/oder einen Durchfluss des Extrakts erfasst.

Erfindungsgemäß weist die Verteileinrichtung einen weiteren steuerbaren Ausgang auf, der einen direkten Auslass des Extrakts aus der Verteileinrichtung in die Umgebung ermöglicht, wobei eine Antriebseinrichtung vorgesehen ist, welche dazu geeignet und bestimmt ist, ein Öffnen oder Schließen dieses Ausgangs zu bewirken.

Unter einem direkten Auslass des Extrakts wird dabei verstanden, dass dieses nicht etwa in einem Schlauch oder eine andere Leitung geleitet wird, sondern direkt in die Umgebung beispielsweise direkt auf ein zu bearbeitendes landwirtschaftliches Feld.

Besonders bevorzugt gelangt auf diese Weise das Extrakt unmittelbar von der Verteileinrichtung auf den Boden. Bevorzugt ist die Vorrichtung derart gestaltet, dass aus der Verteileinrichtung austretendes Extrakt unmittelbar auf den Boden gelangt und nicht etwa an anderen Gegenständen oder Elementen der Vorrichtung, der etwa Gestängen oder Verschlauchungen oder dergleichen abprallt.

Bei einer bevorzugten Ausführungsform weist der Ausgang einen größeren Querschnitt auf als die einzelnen Abführleitungen für das Extrakt. Besonders bevorzugt weist der Ausgang auch einen größeren Strömungsquerschnitt auf als ein sich aus einer Aussummierung aller Strömungsquerschnitte der einzelnen Ausgänge ergebender Gesamtquerschnitt.

Bei einer bevorzugten Ausführungsform ist der Ausgang in einem Betriebszustand an einer Unterseite der Verteileinrichtung angeordnet.

Durch die entsprechende Dimensionierung dieses Auslasses ist es möglich, dass beim Öffnen des Auslasses einerseits sämtliches Extrakt aus dem Sammelraum abgezogen wird, aber insbesondere durch eine Sogwirkung auch beispielsweise verklemmte oder verkeilte Elemente aus den einzelnen Öffnungen gezogen werden können.

In einer weiteren vorteilhaften Ausführungsform ist innerhalb des Aufnahmeraums der Verteileinrichtung wenigstens eine Scheibe angeordnet, welche eine Vielzahl von Öffnungen aufweist, wobei das Extrakt durch diese Öffnungen zu den einzelnen Ausgängen führbar ist. Bevorzugt weist der Verteilkörper eine Vielzahl von Kontaktkörpern auf, welche über diese Öffnungen streichen.

Besonders bevorzugt weist die Verteileinrichtung zwei derartige Scheiben auf. Bevorzugt ist der Verteilkörper zwischen diesen beiden Scheiben angeordnet.

Besonders bevorzugt weist der Verteilkörper wenigstens zwei, bevorzugt wenigstens drei und bevorzugt wenigstens vier Arme auf, an denen die genannten Kontaktkörper angeordnet sind. In diesem Bereich, d. h. zwischen diesen besagten Kontaktkörpern und den Scheiben kann es zu Verkeilungen von beispielsweise Holzstücken oder dergleichen kommen. In diesem Fall kann der Verteilkörper in seiner Gesamtheit blockiert werden.

Einer bevorzugten Ausführungsform liegt eine Anzahl dieser Ausgänge der Verteileinrichtung zwischen 4 und 60, bevorzugt zwischen 6 und 50, und besonders bevorzugt, zwischen 8 und 48.

Erfindungsgemäß ist die Steuerungseinrichtung dazu geeignet und bestimmt, bei Erkennen eines Fehlers wenigstens zwei unterschiedliche Maßnahmen einzuleiten. Erfindungsgemäß handelt es sich bei einer dieser Maßnahmen, um eine reziprokierende Bewegung des Verteilkörpers.

Erfindungsgemäß handelt es sich bei einer dieser Maßnahmen um eine Öffnung des oben erwähnten weiteren Ausgangs des Aufnahmeraums.

So ist es beispielsweise möglich, dass als erste Maßnahme der Verteilkörper zunächst um einen vorgegebenen Drehwinkel in eine entgegengesetzte Drehrichtung bewegt wird dann wieder in der besagten Richtung und dieser Vorgang beispielsweise ein, zwei oder dreimal wiederholt wird. Auf diese Weise kann beispielsweise eine Verstopfung aufgelöst werden oder aber etwa ein blockierender Gegenstand letztlich doch durch die besagte Öffnung gedrängt werden.

Besonders bevorzugt ist ein Schwenkwinkel, um den der Verteilkörper im Rahmen der reziprokierenden Bewegung geschwenkt wird >5° bevorzugt >10° bevorzugt >20° bevorzugt >30°. Einer weiteren bevorzugten Ausführungsform ist dieser Schwenkwinkel < 100° bevorzugt <90° bevorzugt < 80°. Es wäre jedoch auch denkbar, dass zunächst eine mehrere Umdrehungen in einer Drehrichtung durchgeführt werden und dann eine oder mehrere Umdrehungen in der entgegengesetzten Drehrichtung.

Sollte sich diese Maßnahme als unzureichend erweisen, sollte also beispielsweise die Sensoreinrichtung immer noch einen Wert ausgeben, der für ein Blockieren des Verkeilkörpers charakteristisch ist, so ist es möglich, als weitere Maßnahme die Öffnung des besagten Ausgangs einzuleiten, um auf diese Weise die einzelnen Öffnungen von den Verstopfungen freizubekommen.

Bevorzugt weist die Vorrichtung eine Anzeigeeinrichtung auf, welche dazu geeignet und bestimmt ist einen Nutzer über eine Fehlfunktion einer Verteileinrichtung zu informieren. Bevorzugt ist die Anzeigeeinrichtung auch dazu geeignet und bestimmt, den Benutzer über eine Massnahme zu informieren, welche die Steuerungseinrichtung einleitet, um einen Fehler zu beseitigen.

So ist es denkbar, dass im Falle einer auftretenden Verstopfung eine Reihe von Maßnahmen erfolgt. In einem ersten Schritt kann ein dreimaliges oder x-maliges Umschalten der Drehrichtung des Verteilkörpers erfolgen, um die Verstopfung zu lösen.

Ist die Verstopfung dann noch nicht beseitigt, kann für einen vorgegebenen Zeitraum beispielsweise 2 Sekunden der Verteilerausgang geöffnet werden, insbesondere ein Schieber an der Verteileinrichtung geöffnet werden, um diesen zu leeren.

Besonders bevorzugt bewirkt die Steuerungseinrichtung ein Öffnen des zweiten Ausgangs für einen vorgegebenen Zeitraum. Bevorzugt ist dieser Zeitraum größer als 0,5 Sekunden, bevorzugt größer als 1 Sekunde, bevorzugt größer als 2 Sekunden.

Weiterhin ist bevorzugt dieser Zeitraum geringer als 20 Sekunden, bevorzugt geringer als 15 Sekunden, bevorzugt geringer als 10 Sekunden und bevorzugt geringer als 8 Sekunden.

Wie oben erwähnt, ist bevorzugt eine Sensoreinrichtung für mehrere Verteileinrichtungen vorgesehen. Es wäre jedoch ebenfalls bevorzugt denkbar, dass mehrere Verteileinrichtungen vorgesehen sind und/oder jeder Verteileinrichtung eine Sensoreinrichtung zugeordnet wird.

Bevorzugt werden die hier beschriebenen Maßnahmen auch während einer Fahrt oder während einer Bewegung des Reservoirs durchgeführt.

Bei einer weiteren bevorzugten Ausführungsform weist die Vorrichtung eine Vielzahl von Verteileinrichtungen auf und besonders bevorzugt ist jeder dieser Verteileinrichtungen eine Sensoreinrichtung zugeordnet.

Bevorzugt ist bei dieser Ausführungsform eine Hauptleitung für das Hydraulikmittel vorgesehen und wenigstens zwei oder mehrere Abzweigleitungen führen dann zu den einzelnen Verteileinrichtungen bzw. deren Motoren.

Bei einer weiteren Vorteilhaften Ausführungsform weist die Vorrichtung eine Anzeigeeinrichtung auf, welche dem Benutzer beispielsweise Fehler anzeigt. So kann dem Benutzer angezeigt werden, dass eine bestimmte Verteileinrichtung blockiert ist oder in einer bestimmten Verteileinrichtung ein Fehler auftritt.

Wie oben erwähnt, ist es möglich, dass der besagte weitere Ausgang der Verteileinrichtung automatisch bei Auftreten eines Fehlers öffnet. Es wäre doch auch denkbar, dass dieser zweite Ausgang durch eine Benutzereingabe geöffnet wird, beispielsweise der Benutzer über eine Anzeigeeinrichtung gefragt wird, ob er eine Öffnung des der entsprechenden Verteileinrichtung wünscht.

Die vorliegende Erfindung ist auf eine Verteileinrichtung zum Verteilen eines fließfähigen Mediums und insbesondere eines Extrakts auf landwirtschaftliche Nutzflächen gerichtet, wobei die Verteileinrichtung einen Zufluss aufweist, mittels dessen einem Aufnahmeraum der Verteileinrichtung das Extrakt zuführbar ist, sowie eine Vielzahl von Ausgängen, über welche das Extrakt auf eine Vielzahl von Ausbringleitungen verteilbar ist. Weiterhin weist bevorzugt die Verteileinrichtung innerhalb des Aufnahmeraums einen bezüglich einer Drehachse drehbaren Verteilkörper auf, der bevorzugt von einem Motor zur Drehung antreibbar ist und es ist weiterhin eine Steuerungseinrichtung zum Steuern dieses Motors vorgesehen.

Erfindungsgemäß ist wenigstens eine Sensoreinrichtung vorgesehen, welche wenigstens einen Wert erfasst, der für eine ordnungsgemäße Funktion der Verteileinrichtung charakteristisch ist und weiterhin ist diese Steuerungseinrichtung dazu geeignet und bestimmt, den Motor unter Berücksichtigung dieses charakteristischen Werts zu steuern.

Bei der erfindungsgemäßen Ausgestaltung weist die Verteileinrichtung einen weiteren Ausgang auf, über welchen das fließfähige Medium direkt aus dem Aufnahmeraum in die Umgebung entlassen werden kann.

Bevorzugt handelt es sich bei dem genannten Motor um einen Hydraulikmotor, dem damit zu dessen Betrieb ein Hydraulikmittel zugeführt wird.

Die vorliegende Erfindung ist weiterhin auf ein Verfahren zum Ausbringen eines fließfähigen Mediums, insbesondere eines Extrakts auf landwirtschaftliche Nutzflächen gerichtet, wobei ein Reservoir das Extrakt aufnimmt und eine Förderleitung das Extrakt (insbesondere von dem Reservoir) zu einer Verteileinrichtung fördert, wobei die Verteileinrichtung einen Zufluss aufweist, mittels dessen einem Aufnahmeraum der Verteileinrichtung das Extrakt zugeführt wird, sowie eine Vielzahl von Ausgängen, über welche das Extrakt auf eine Vielzahl von Ausbringleitungen verteilt wird, und wobei die Verteileinrichtung innerhalb des Aufnahmeraums einen bezüglich einer Drehachse drehbaren Verteilkörper aufweist, der von einem Motor zur Drehung angetrieben wird und wobei weiterhin eine Steuerungseinrichtung diesen Motor steuert.

Erfindungsgemäß weist die Vorrichtung eine Sensoreinrichtung auf, welche wenigstens einen Wert erfasst, der für eine ordnungsgemäße Funktion der Verteileinrichtung charakteristisch ist und die Steuerungseinrichtung den Motor unter Berücksichtigung dieses charakteristischen Werts steuert und eine Öffnung des Aufnahmeraums unter Berücksichtigung dieses charakteristischen Werts bewirkt (insbesondere um eine Entleerung dieses Aufnahmeraums zu erreichen) .

Es wird daher auch verfahrensseitig vorgeschlagen, dass bei Auftreten von einem Fehler, die Steuerungseinrichtung den Motor entsprechend steuert, rezipro-kierend antreibt und ein Öffnen des Aufnahmeraums zum (unmittelbaren) Auslassen des fließfähigen Mediums bewirkt.

Erfindungsgemäß wird bei einem Auftreten von einem Fehler ein Ausgang der Verteileinrichtung geöffnet, über welchen dann das Extrakt unmittelbar in die Umgebung und insbesondere auf einen Boden fällt.

Bei einem weiteren bevorzugten Verfahren handelt es sich bei dem Motor um einen Hydraulikmotor und die Sensoreinrichtung erfasst wenigstens einen Wert, der für eine ordnungsgemäße Funktion dieses Motors charakteristisch ist.

Besonders bevorzugt kann die Steuerungseinrichtung in Reaktion auf einen erfassten Wert wenigstens zwei unterschiedliche Maßnahmen einleiten.

Weitere Vorteile und Ausführungsformen ergeben sich aus den beigefügten Zeichnungen:
Darin zeigen:
- Fig. 1: eine schematische Darstellung einer erfindungsgemäßen Vorrichtung; und
- Fig. 2: eine schematische Darstellung einer Verteileinrichtung.

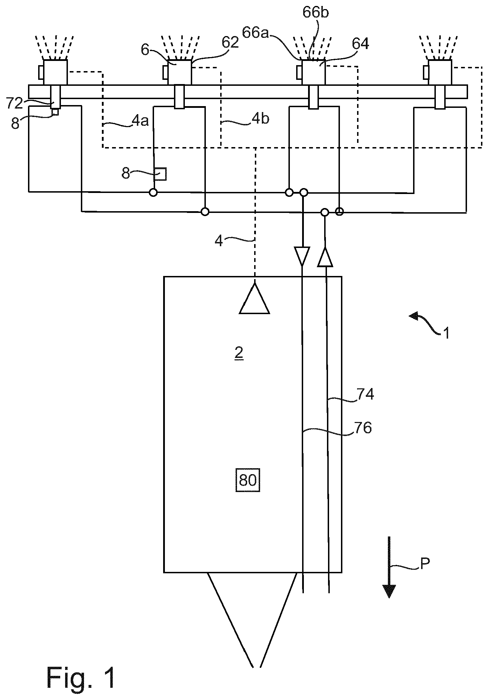

Figur 1 zeigt eine schematische Darstellung einer erfindungsgemäßen Vorrichtung 1. Diese weist ein Reservoir bzw. einen Tank 2 auf. Ausgehend von diesem Reservoir 2 wird mittels einer Förderleitung 4 das fließfähige Medium und insbesondere das Extrakt zu hier insgesamt vier Verteileinrichtungen 6 gefördert. Zu diesem Zweck sind Abzweigleitungen 4a, 4b vorgesehen.

Die einzelnen Verteileinrichtungen 6 weisen jeweils Hydraulikmotoren 72 auf. Diese Hydraulikmotoren werden ausgehend von einer Zuführleitung 74 jeweils mit einem Hydraulikmittel versorgt. Das Bezugszeichen 76 kennzeichnet den Rücklauf dieses Hydraulikmittels.

Das Bezugszeichen 8 kennzeichnet hier eine Sensoreinrichtung, welche beispielsweise einen Druck oder einen Durchfluss des Hydraulikmittels erfassen kann. Daneben oder zusätzlich kann aber auch eine Sensoreinrichtung 8 vorgesehen sein, welche direkt eine Drehzahl des Motors 72 oder ein Drehmoment desselben erfasst.

Daneben könnten jedoch auch entsprechende Durchflussmesseinrichtungen oder Druckmesseinrichtungen in der Zuleitung 4 vorgesehen sein.

Das Bezugszeichen 80 kennzeichnet eine Steuerungseinrichtung, welche die gezeigten Verteileinrichtungen 6 bzw. deren Hydraulikmotoren 72 auch unter Verwendung eines Signals der Sensoreinrichtung 8 steuert. Daneben ist bevorzugt diese Steuerungseinrichtung auch dazu geeignet und bestimmt, ein Öffnen und/oder Schließen der jeweiligen Aufnahmeräume dieser Verteileinrichtungen 6 zu bewirken.

Falls beispielsweise die Sensoreinrichtung einen verminderten Durchfluss in der Hydraulikleitung oder der Extraktleitung feststellt, kann dies als Fehler einer bestimmten Verteileinrichtung 6 gewertet werden.

Die Bezugszeichen 66a und 66b kennzeichnen zwei Ausgänge der Verteileinrichtung.

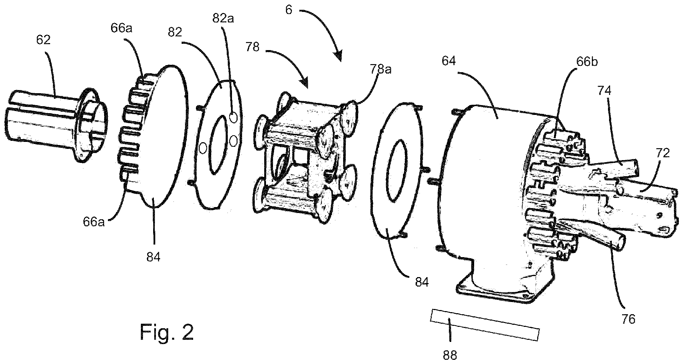

Fig. 2 zeigt eine Darstellung einer Verteileinrichtung 6 in einer Explosionsdarstellung. Diese weist einen Zufluss 62 bzw. einen Eingang auf, über welchen der Verteileinrichtung 6 ein Extrakt zugeführt werden kann. Dabei bildet die Verteileinrichtung 6 einen Aufnahmeraum 64 aus, der zur Aufnahme des Extrakts dient. Bevorzugt weist dieser Aufnahmeraum 64 ein zylinderförmiges Volumen auf.

Innerhalb dieses Aufnahmeraums 64 sind zwei stationäre Platten bzw. Scheiben 82, 84 vorgesehen, die jeweils eine Vielzahl von Öffnungen 82a aufweisen. Diese Öffnungen 82a führen jeweils zu einzelnen Ausgängen 66a, 66b der Verteileinrichtung 6, wobei hier eine vorgegebene Anzahl von Ausgängen 66a in einer erste Richtung führt und eine weitere Anzahl von Ausgängen 66b in eine dieser ersten Richtung entgegengesetzte zweite Richtung führt.

Das Bezugszeichen 62 kennzeichnet eine Zuführeinrichtung zum Zuführen des Extrakts in die Verteileinrichtung 6

Das Bezugszeichen 72 kennzeichnet einen Motor und insbesondere einen Hydraulikmotor. Dieser Hydraulikmotor treibt einen Verteilkörper 78 an. Dieser Verteilkörper weist hier eine Vielzahl von Kontaktelementen 78a auf, welche hier über die Öffnungen 82a der beiden Platten bzw. Scheiben 82, 84 streifen und so die Förderung des Extrakts aus der Verteileinrichtung fördern.

Durch bestimmte Materialien innerhalb des Extrakts kann es dazu kommen, dass die Drehbewegung des Verteilkörpers 78 gebremst oder blockiert wird.

Eine Sensoreinrichtung kann dieses Verklemmen oder Blockieren erkennen und eine Steuerung des Hydraulikmotors kann entsprechende Gegenmaßnahmen wie oben erläutert einleiten, wie etwa eine reziprokierende Bewegung des Verteilkörpers oder eine Öffnung des Aufnahmeraums.

Das Bezugszeichen 88 kennzeichnet grob schematisch einen weiteren Ausgang bzw. eine Öffnungseinrichtung, um (insbesondere im laufenden Betrieb den Aufnahmeraum zu öffnen. Dabei ist bevorzugt eine (nicht gezeigte) Antriebseinrichtung vorgesehen, welche ein Öffnen und/oder ein Schließen dieser Öffnungseinrichtung 88 bzw. des weiteren Ausgangs bewirken kann. Dabei befindet sich diese Öffnungseinrichtung bevorzugt an der Befestigung der Verteileinrichtung. So wäre es denkbar, dass ein Standfuss der Verteileinrichtung gleichzeitig auch als Öffnungseinrichtung ausgebildet ist. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verteileinrichtung (6) zum Verteilen eines fließfähigen Mediums insbesondere eines Extrakts auf landwirtschaftliche Nutzflächen, wobei die Verteileinrichtung (6) einen Zufluss (62) aufweist, mittels dessen einem Aufnahmeraum (64) der Verteileinrichtung (6) das Extrakt zuführbar ist sowie eine Vielzahl von Ausgängen (66a, 66b) über welche das Extrakt auf eine Vielzahl von Ausbringleitungen verteilbar ist und wobei die Verteileinrichtung (6) innerhalb des Aufnahmeraums (64) einen bezüglich einer Drehachse drehbaren Verteilkörper (78) aufweist, der von einem Motor (72) zur Drehung antreibbar ist und weiterhin eine Steuerungseinrichtung (80) zum Antreiben dieses Motors (72) vorgesehen ist, wobei wenigstens eine Sensoreinrichtung (8) vorgesehen ist, welche wenigstens einen Wert erfasst, der für eine ordnungsgemäße Funktion der Verteileinrichtung (6) charakteristisch ist und die Steuerungseinrichtung (80) dazu geeignet und bestimmt ist, den Motor (72) unter Berücksichtigung dieses charakteristischen Wertes zu steuern und die Verteileinrichtung (6) einen weiteren Ausgang (88) aufweist über welchen das fließfähige Medium direkt aus dem Aufnahmeraum (64) in die Umgebung entlassen werden kann,
wobei die Verteileinrichtung (6) den eirrerr weiteren steuerbaren Ausgang (88) aufweist,
der einen direkten Auslass des Extrakts aus der Verteileinrichtung (6) in die Umgebung ermöglicht, wobei eine Antriebseinrichtung vorgesehen ist, welche dazu geeignet und bestimmt ist, ein Öffnen und Schließen dieses Ausgangs (88) zu bewirken, wobei die Steuerungseinrichtung (80) dazu geeignet und bestimmt ist, bei Erkennen eines Fehlers wenigstens zwei unterschiedliche Maßnahmen einzuleiten wobei eine dieser Maßnahmen eine reziprokierende Bewegung des Verteilkörpers (78) ist und eine Maßnahme eine Öffnung des weiteren Ausgangs (88) des Aufnahmeraums (64) ist.

2. Vorrichtung (1) zum Ausbringen eines fließfähigen Mediums, insbesondere eines Extrakts auf landwirtschaftliche Nutzflächen mit einem Reservoir (2) zur Aufnahme des Extrakts, mit einer Förderleitung (4) zum Fördern des Extrakts zu einer Verteileinrichtung (6), sowie mit einer Verteileinrichtung (6) nach Anspruch 1, wobei die Steuerungseinrichtung (80) dazu geeignet und bestimmt ist, den Aufnahmeraum (64) unter Berücksichtigung dieses charakteristischen Wertes zu öffnen.

3. Vorrichtung (1) nach Anspruch 2,
**dadurch gekennzeichnet, dass**
der Motor (72) ein Hydraulikmotor ist und wenigstens eine Zuleitung (74) vorgesehen ist, welche dem Hydraulikmotor (72) ein Hydraulikmittel zuführt, sowie wenigstens eine Ableitung (76), welche das Hydraulikmittel von dem Hydraulikmotor (72) abführt.

4. Vorrichtung (1) nach Anspruch 2 oder 3,
**dadurch gekennzeichnet, dass**
die Sensoreinrichtung (8) dazu geeignet und bestimmt ist wenigstens einen Wert zu erfassen, der für den Betrieb dieses Motors (72) charakteristisch ist, wobei bevorzugt die Sensoreinrichtung (8) aus einer Gruppe von Sensoreinrichtungen (8) ausgewählt ist, welche Drucksensoren, Drehzahlsensoren und Durchflussensoren enthält.

5. Vorrichtung (1) nach wenigstens einem der vorangegangenen Ansprüche 2 - 4
**dadurch gekennzeichnet, dass**
innerhalb des Aufnahmeraums (64) der Verteileinrichtung (6) wenigstens eine Scheibe (82, 84) angeordnet ist, welche eine Vielzahl von Öffnungen (82a) aufweist und das Extrakt durch diese Öffnungen (82a) zu den einzelnen Ausgängen (66a, 66b) führbar ist, wobei bevorzugt der Verteilkörper (78) eine Vielzahl von Kontaktkörpern (78a) aufweist, welche über diese Öffnungen (82a) streichen.

6. Vorrichtung (1) nach wenigstens einem der vorangegangenen Ansprüche 2 - 5
**dadurch gekennzeichnet, dass**
die Vorrichtung (1) eine Vielzahl von Verteileinrichtungen (6) aufweist und besonders bevorzugt jeder dieser Verteileinrichtungen (6) eine Sensoreinrichtung (8) zugeordnet ist.

7. Verfahren zum Ausbringen eines fließfähigen Mediums insbesondere eines Extrakts auf landwirtschaftliche Nutzflächen wobei ein Reservoir (2) das Extrakt aufnimmt, und eine Förderleitung (4) das Extrakt zu einer Verteileinrichtung (6) fördert, wobei die Verteileinrichtung (6) einen Zufluss (62) aufweist, mittels dessen einem Aufnahmeraum (64) der Verteileinrichtung (6) das Extrakt zugeführt wird sowie eine Vielzahl von Ausgängen (66a, 66b) über welche das Extrakt auf eine Vielzahl von Ausbringleitungen verteilt wird und wobei die Verteileinrichtung (6) innerhalb des Aufnahmeraums (64) einen bezüglich einer Drehachse drehbaren Verteilkörper (78) aufweist, der von einem Motor (72) zur Drehung angetrieben wird und weiterhin eine Steuerungseinrichtung (80) diesen Motor (72) steuert, wobei die Vorrichtung (1) wenigstens eine Sensoreinrichtung (8) aufweist, welche wenigstens einen Wert erfasst, der für eine ordnungsgemäße Funktion der Verteileinrichtung (6) charakteristisch ist und die Steuerungseinrichtung (80) den Motor und eine Öffnung des Aufnahmeraums (64) unter Berücksichtigung dieses charakteristischen Wertes steuert, wobei die Verteileinrichtung (6) einen weiteren steuerbaren Ausgang (88) aufweist, der einen direkten Auslass des Extrakts aus der Verteileinrichtung (6) in die Umgebung ermöglicht, wobei eine Antriebseinrichtung den Ausgangs (88) öffnet und schließt, wobei die Steuerungseinrichtung (80) bei Erkennen eines Fehlers wenigstens zwei unterschiedliche Maßnahmen einleitet, wobei eine dieser Maßnahmen eine reziprokierende Bewegung des Verteilkörpers (78) ist und eine Maßnahme eine Öffnung des weiteren Ausgangs (88) des Aufnahmeraums ist.

8. Verfahren nach dem vorangegangenen Anspruch,
**dadurch gekennzeichnet, dass**
der Motor (72) ein Hydraulikmotor ist und die Sensoreinrichtung (8) wenigstens einen Wert erfasst, der für eine ordnungsgemäße Funktion dieses Motors (72) charakteristisch ist.

## Claims

1. A distribution device (6) for distributing a flowable medium, in particular an extract, onto agricultural land, wherein the distribution device (6) comprises an inlet (62) by means of which the extract can be fed into a receiving chamber (64) of the distribution device (6), as well as a plurality of outlets (66a, 66b) through which the extract can be distributed to a plurality of application lines, and wherein the distribution device (6) comprises, within the receiving chamber (64), a distribution body (78) rotatable about an axis of rotation, which is driven by a motor (72) to rotate and a control device (80) is provided to drive this motor (72), wherein at least one sensor device (8) is provided that detects at least one value characteristic of the proper functioning of the distribution device (6), and the control device (80) is suitable and designed to control the motor (72) while taking this characteristic value into account, and the distribution device (6) comprises a further outlet (88) through which the flowable medium can be discharged directly from the receiving chamber (64) into the environment,
wherein the distribution device (6) includes the additional controllable outlet (88), which enables direct discharge of the extract from the distribution device (6) into the environment, wherein a drive device is provided that is suitable and intended to cause this outlet (88) to open and close, and wherein the control device (80) is suitable and intended to initiate at least two different measures upon detection of a fault, one of these measures being a reciprocating movement of the distribution body (78) and another measure being the opening of the additional outlet (88) of the receiving chamber (64).

2. Apparatus (1) for applying a flowable medium, in particular an extract, to agricultural land, comprising a reservoir (2) for holding the extract, a delivery line (4) for conveying the extract to a distribution device (6), and a distribution device (6) according to claim 1, wherein the control device (80) is suitable and designed to open the receiving chamber (64) taking this characteristic value into account.

3. Apparatus (1) according to claim 2,
**characterized in that**
the motor (72) is a hydraulic motor, and at least one supply line (74) is provided to supply a hydraulic fluid to the motor (72), as well as at least one discharge line (76) to discharge the hydraulic fluid from the motor (72).

4. A device (1) according to claim 2 or 3,
**characterized in that**
the sensor device (8) is suitable and intended to detect at least one value that is characteristic of the operation of this motor (72), wherein the sensor device (8) is preferably selected from a group of sensor devices (8) comprising pressure sensors, speed sensors, and flow sensors.

5. A device (1) according to at least one of the preceding claims 2-4
**characterized in that**
at least one disc (82, 84) is arranged within the receiving chamber (64) of the distribution device (6), which disc has a plurality of openings (82a) and through which the extract can be directed to the individual outlets (66a, 66b) through these openings (82a), wherein, preferably, the distribution body (78) comprises a plurality of contact bodies (78a) that pass over these openings (82a).

6. A device (1) according to at least one of the preceding claims 2-5
**characterized in that**
the device (1) comprises a plurality of distribution devices (6), and, most preferably, each of these distribution devices (6) is associated with a sensor device (8).

7. A method for applying a flowable medium, in particular an extract, to agricultural land, wherein a reservoir (2) holds the extract, and a delivery line (4) conveys the extract to a distribution device (6), wherein the distribution device (6) comprises an inlet (62), by means of which the extract is fed into a receiving chamber (64) of the distribution device (6), as well as a plurality of outlets (66a, 66b) through which the extract is distributed to a plurality of application lines, and wherein the distribution device (6) comprises, within the receiving chamber (64), a distribution body (78) rotatable about an axis of rotation, which is driven by a motor (72) to rotate and a control device (80) controls this motor (72), wherein the device (1) comprises at least one sensor device (8) that detects at least one value characteristic of the proper functioning of the distribution device (6), and the control device (80) controls the motor and an opening of the receiving chamber (64) taking this characteristic value into account, wherein the distribution device (6) comprises a further controllable outlet (88) that allows for direct discharge of the extract from the distribution device (6) into the environment, wherein a drive device opens and closes the outlet (88), wherein the control device (80) initiates at least two different measures upon detection of a fault, one of these measures being a reciprocating movement of the distribution body (78) and another measure being the opening of the further outlet (88) of the receiving chamber.

8. A method according to the preceding claim,
**characterized in that**
the motor (72) is a hydraulic motor, and the sensor device (8) detects at least one value that is characteristic of the proper operation of this motor (72).

## Revendications

1. Dispositif de distribution (6) destiné à répartir un fluide, en particulier un extrait, sur des surfaces agricoles, le dispositif de distribution (6) comportant une entrée (62) permettant d'acheminer l'extrait vers une chambre de réception (64) du dispositif de distribution (6), ainsi qu'une pluralité de sorties (66a, 66b) par lesquelles l'extrait peut être réparti vers une pluralité de conduites d'épandage, et dans lequel le dispositif de distribution (6) comporte, à l'intérieur de la chambre de réception (64), un corps de distribution (78) pouvant tourner autour d'un axe de rotation, qui est entraîné en rotation par un moteur (72) et un dispositif de commande (80) étant en outre prévu pour entraîner ce moteur (72), au moins un dispositif capteur (8) étant prévu, qui détecte au moins une valeur caractéristique du bon fonctionnement du dispositif de distribution (6) et le dispositif de commande (80) est adapté et destiné à commander le moteur (72) en tenant compte de cette valeur caractéristique, et le dispositif de distribution (6) comporte une autre sortie (88) par laquelle le fluide peut être évacué directement de la chambre de réception (64) vers l'environnement, le dispositif de distribution (6) comporte la sortie (88) supplémentaire commandable qui permet une évacuation directe de l'extrait hors du dispositif de distribution (6) vers l'environnement, un dispositif d'entraînement étant prévu, qui est adapté et destiné à provoquer l'ouverture et la fermeture de cette sortie (88), le dispositif de commande (80) étant adapté et destiné à de déclencher au moins deux mesures différentes en cas de détection d'un défaut, l'une de ces mesures consistant en un mouvement de va-et-vient du corps de distribution (78) et l'autre en une ouverture de la sortie (88) supplémentaire de la chambre de réception (64).

2. Dispositif (1) destiné à épandre un fluide, en particulier un extrait, sur des surfaces agricoles, comprenant un réservoir (2) destiné à recevoir l'extrait, une conduite d'alimentation (4) destinée à acheminer l'extrait vers un dispositif de distribution (6), ainsi qu'un dispositif de distribution (6) selon la revendication 1, le dispositif de commande (80) étant adapté et destiné à ouvrir la chambre de réception (64) en tenant compte de cette valeur caractéristique.

3. Dispositif (1) selon la revendication 2,
**caractérisé en ce que**
le moteur (72) est un moteur hydraulique et qu'il est prévu au moins une conduite d'alimentation (74) qui alimente le moteur (72) en fluide hydraulique, ainsi qu'au moins une conduite d'évacuation (76) qui évacue le fluide hydraulique du moteur (72).

4. Dispositif (1) selon la revendication 2 ou 3,
**caractérisée en ce que**
le dispositif capteur (8) est adapté et destiné à détecter au moins une valeur caractéristique du fonctionnement de ce moteur (72), le dispositif capteur (8) étant de préférence choisi parmi un groupe de dispositifs capteur (8) comprenant des capteurs de pression, des capteurs de vitesse de rotation et des capteurs de débit.

5. Dispositif (1) selon au moins l'une des revendications 2 à 4 précédentes,
**caractérisé en ce que**
au moins un disque (82, 84) est disposé à l'intérieur de la chambre de réception (64) du dispositif de distribution (6), lequel disque présente une pluralité d'ouvertures (82a) et permet à l'extrait de s'écouler à travers ces ouvertures (82a) vers les différentes sorties (66a, 66b) ; le corps de distribution (78) comportant de préférence une pluralité d'éléments de contact (78a) qui effleurent ces ouvertures (82a).

6. Dispositif (1) selon au moins l'une des revendications 2 à 5 précédentes
**caractérisé en ce que**
le dispositif (1) comporte une pluralité de dispositifs de distribution (6) et, de manière particulièrement préférée, un dispositif capteur (8) est associé à chacun de ces dispositifs de distribution (6).

7. Procédé d'épandage d'un milieu fluide, en particulier d'un extrait, sur des surfaces agricoles, dans lequel un réservoir (2) contient l'extrait, et une conduite d'alimentation (4) achemine l'extrait vers un dispositif de distribution (6), le dispositif de distribution (6) comportant une entrée (62) par laquelle l'extrait est acheminé vers une chambre de réception (64) du dispositif de distribution (6), ainsi qu'une pluralité de sorties (66a, 66b) par lesquelles l'extrait est réparti vers une pluralité de conduites d'épandage, et le dispositif de distribution (6) comportant, à l'intérieur de la chambre de réception (64), un corps de distribution (78) pouvant tourner autour d'un axe de rotation, qui est entraîné en rotation par un moteur (72) et un dispositif de commande (80) commande ce moteur (72), le dispositif (1) comportant au moins un dispositive capteur (8) qui détecte au moins une valeur caractéristique du bon fonctionnement du dispositif de distribution (6) et le dispositif de commande (80) commande le moteur et une ouverture de la chambre de réception (64) en tenant compte de cette valeur caractéristique, le dispositif de distribution (6) comportant une autre sortie (88) commandable qui permet une évacuation directe de l'extrait hors du dispositif de distribution (6) vers l'environnement, un dispositif d'entraînement ouvrant et fermant cette sortie (88), le dispositif de commande (80) déclenchant au moins deux mesures différentes en cas de détection d'un défaut, l'une de ces mesures consistant en un mouvement de va-et-vient du corps de distribution (78) et l'autre en une ouverture de la sortie (88) supplémentaire de la chambre de réception.

8. Procédé selon la revendication précédente,
**caractérisé en ce que**
le moteur (72) est un moteur hydraulique et le dispositif capteur (8) détecte au moins une valeur caractéristique du bon fonctionnement de ce moteur (72).
